# FASCICULE DE BREVET EUROPEEN

(11) **EP 2 417 680 B1**
(45) Date de publication et mention de la délivrance du brevet: **07.06.2017**
(21) Numéro de dépôt: 10713191.4
(22) Date de dépôt: 07.04.2010
(51) Int. Cl.: H02G 5/10

(54) **CONDUCTEUR ELECTRIQUE A REFROIDISSEMENT AMELIORE ET APPAREIL ELECTRIQUE SOUS ENVELOPPE ETANCHE COMPORTANT AU MOINS UN TEL CONDUCTEUR**
ELEKTRISCHER LEITER MIT VERBESSERTER KÜHLUNG UND ELEKTRISCHES GERÄT IN EINEM VERSIEGELTEN GEHÄUSE, DAS MINDESTENS EINEN SOLCHEN LEITER UMFASST
ELECTRIC CONDUCTOR WITH IMPROVED COOLING AND ELECTRIC APPLIANCE IN A SEALED HOUSING COMPRISING AT LEAST ONE SUCH CONDUCTOR

(30) Priorité: 08.04.2009 FR 0952288
(43) Date de publication de la demande: 15.02.2012
(73) Titulaire: General Electric Technology GmbH, 5400 Baden (CH)
(72) Inventeur: GIRARD, Charlie, F-73100 Aix Les Bains (FR); PROFIT, Laurent, F-73410 Epersy (FR)
(74) Mandataire: Ilgart, Jean-Christophe
(86) Numéro de dépôt international: PCT/EP2010/054573
(87) Numéro de publication internationale: WO 2010/115915

(56) Documents cités:
- EP-A- 1 667 300
- DD-A1- 152 034
- DE-U1- 8 534 806
- JP-U- 53 089 589
- JP-U- 57 021 217

## Description

### DOMAINE TECHNIQUE ET ART ANTÉRIEUR

La présente invention se rapporte à des conducteurs électriques à refroidissement amélioré, plus particulièrement à des conducteurs électriques disposés dans une enceinte étanche, et à des appareillages électriques sous enceinte métallique comportant au moins un tel conducteur.

Un poste électrique sous enceinte métallique haute tension comporte, entre autres, un ou plusieurs jeux de barres et un disjoncteur disposés dans une enceinte étanche remplie de gaz diélectrique de type SF₆. Ces jeux des barres ou conducteurs électriques sont généralement de forme cylindrique et creuse, formant ainsi des tubes cylindriques. Plusieurs conducteurs électriques peuvent être connectés en série pour atteindre la longueur souhaitée ou sont connectés au disjoncteur ou à d'autres composants du poste électrique. Ces connexions sont réalisées au moyen de contacts qui peuvent être de type tulipe-rotule, lamelle de contact, ressort de contact ou connexion vissée.

Lors du passage du courant électrique nominal dans le conducteur, celui-ci s'échauffe. La quantité de chaleur ainsi émise est piégée dans l'enceinte. Cette élévation de la température est néfaste aux conducteurs et aux contacts. Cet échauffement est d'autant plus important au niveau des connexions où la résistance électrique est augmentée, les contacts n'étant jamais parfaits.

Il est par conséquent recherché des solutions pour réduire cet échauffement et/ou dissiper plus facilement cette quantité de chaleur.

Une autre solution est celle exposée dans le document GB 1 190 925 consistant à prévoir à l'intérieure de la barre omnibus des ailettes s'étendant en saillie de la face intérieure de la barre omnibus vers l'axe de la barre et sur toute la longueur de la barre omnibus.

Cette solution a effectivement un effet sur le refroidissement du conducteur. Cependant elle ne permet pas un refroidissement au niveau des connexions.

Le document DE 152 034 décrit un dispositif de refroidissement pour un conducteur électrique sous forme de barreau, le dispositif comporte une partie de support fixé à l'extrémité du conducteur à l'extérieur du conducteur et des ailettes solidaire de la partie de support.

Le document DE8534806 décrit un conducteur électrique creux comportant des orifices pour l'admission et l'évacuation d'un gaz.

C'est par conséquent un but de la présente invention d'offrir un conducteur électrique, de type barre, dont le refroidissement est amélioré par rapport aux conducteurs de l'état de la technique, en particulier au niveau des connexions entre un conducteur et un autre composant d'un poste électrique.

### EXPOSÉ DE L'INVENTION

Le but énoncé ci-dessus est atteint par un conducteur électrique comportant une enveloppe cylindrique d'axe longitudinal percée d'orifices pour assurer la connexion naturelle du gaz, ledit conducteur étant muni à chacune de ses extrémités à l'intérieur de l'enveloppe d'ailettes s'étendant selon l'axe longitudinal.

Grâce à l'invention, il y a apparition d'un gradient thermique longitudinal des extrémités du conducteur vers l'extrémité des ailettes, favorisant le refroidissement au niveau des extrémités du conducteur.

En d'autres termes, on crée un flux thermique longitudinal vers l'intérieur du conducteur, de sorte à évacuer la chaleur générée au niveau des extrémités vers des zones du conducteur pour lesquelles les exigences de niveau de température sont moins fortes.

De manière particulièrement avantageuse, on prévoit de rapporter les radiateurs dans le conducteur simplifiant le contrôle de la propreté des radiateurs et du conducteur.

De manière également avantageuse, l'enveloppe du conducteur comporte des orifices tels qu'ils assurent l'apparition d'une convection forcée au sein du conducteur améliorant le refroidissement des radiateurs.

De manière également avantageuse par rapport au système de refroidissement de l'état de la technique, le radiateur rapporté n'est pas parcouru par un courant, ce qui lui permet de ne pas être soumis à l'effet Joule.

La présente invention a pour objet un dispositif de refroidissement d'axe longitudinal pour un conducteur d'axe longitudinal pour poste électrique sous enveloppe métallique remplie d'un gaz diélectrique, comportant une enveloppe de forme cylindrique creuse, le conducteur comportant un contact à chacune de ses extrémités longitudinales, ladite enveloppe définissant un volume intérieur rempli de gaz, ladite enveloppe étant percée d'au moins deux orifices destinés à permettre la circulation du gaz entre le volume intérieur et l'extérieur du conducteur, ledit dispositif de refroidissement étant destiné à être monté dans le conducteur de sorte que son axe longitudinal soit sensiblement coaxial avec l'axe du conducteur, le dispositif de refroidissement comportant une partie de montage et une surface d'échange thermique solidaire de la partie de montage et s'étendant longitudinalement, la partie de montage étant destinée à solidariser le dispositif de refroidissement au conducteur au niveau d'une extrémité de connexion du conducteur et la surface d'échange thermique étant destinée à être reçue dans le volume intérieur du conducteur.

La partie de montage peut comporter un passage central traversant.

La surface d'échange thermique est avantageusement composée de plusieurs ailettes pouvant être parallèles entre elles et parallèles à un plan contenant l'axe longitudinal.

De manière avantageuse, la partie de montage comporte une forme correspondante à la forme intérieure de l'extrémité de connexion de sorte à permettre un montage à force et à assurer une bonne conduction thermique.

Le dispositif de refroidissement peut par exemple être réalisé par fonderie en cuivre ou en aluminium.

La présente invention a également pour objet un conducteur électrique d'axe longitudinal pour poste électrique sous enveloppe métallique remplie d'un gaz diélectrique, comportant une enveloppe de forme cylindrique creuse, ledit conducteur étant destiné à être disposé de sorte à ce que son axe longitudinal soit orienté sensiblement horizontalement, le conducteur comportant un contact à chacune de ses extrémités longitudinales, ladite enveloppe définissant un volume intérieur rempli de gaz, ladite enveloppe étant percée d'au moins deux orifices destinés à permettre la circulation du gaz entre le volume intérieur et l'extérieur du conducteur, ledit conducteur comportant un dispositif de refroidissement selon l'invention apte à établir un gradient thermique orienté sensiblement dans la direction longitudinale vers l'intérieur du conducteur entre chaque extrémité de connexion et le gaz contenu dans le volume intérieur de sorte à provoquer un refroidissement des extrémités de connexion.

Des dispositifs de refroidissement sont prévus au niveau de chacune des extrémités de connexion du conducteur, chaque dispositif comportant une partie support disposée à l'intérieur de l'extrémité de connexion et en contact avec ladite extrémité et une surface d'échange thermique avec le gaz.

De manière particulièrement avantageuse, chaque partie support est emmanchée à force dans le conducteur.

La partie support peut comporter un passage central débouchant d'une part vers l'extérieur du conducteur et d'autre part dans le volume intérieur du conducteur.

La surface de d'échange thermique est avantageusement orientée par rapport aux orifices de circulation de gaz de sorte à ne pas les obturer.

La surface d'échange thermique est par exemple formée par une pluralité d'ailettes s'étendant sensiblement longitudinalement à partir de la partie support. Les ailettes sont par exemple toutes parallèles les unes aux autres et parallèles à un plan contenant l'axe longitudinal du conducteur.

Le conducteur électrique selon l'invention peut comporter au moins deux orifices pour la circulation du gaz au niveau de chacun des surfaces d'échange thermique.

Les orifices de circulation de gaz sont par exemple contenus dans un plan contenant l'axe longitudinal, avantageusement ledit plan étant sensiblement vertical.

Dans un exemple de réalisation, l'enveloppe comporte une partie supérieure et une partie inférieure délimitées par un plan sensiblement horizontal contenant l'axe longitudinal et, un desdits orifices étant dans sa partie supérieure, dit orifice supérieur, et l'autre orifice étant dans sa partie inférieure, dit orifice inférieur, lesdits orifices ayant chacun une forme de fente, dont la plus grande dimension s'étend sensiblement le long de l'axe longitudinal. La section de l'orifice inférieur peut être supérieure ou égale à la section de l'orifice supérieur.

Le rapport de la section de l'orifice inférieur et de la section de l'orifice supérieur est avantageusement compris entre 1 et 1,5.

Le conducteur peut comporter deux orifices dans la partie inférieure symétriques par rapport à un plan contenant l'axe longitudinal et l'orifice de la partie supérieure.

En considérant une section du conducteur par un plan orthogonal à l'axe longitudinal au niveau des orifices, la section des orifices représente par exemple de 6% à 10% de la section totale du conducteur.

Les bords des orifices présentent avantageusement un rayon de courbure suffisamment grand pour limiter les contraintes diélectriques pouvant apparaître au niveau des bords, par exemple le rayon de courbure des bords est au moins égal à 3 mm.

Le rapport entre la longueur de chaque orifice et sa largeur est avantageusement compris entre 2 et 200.

La présente invention a également pour objet un dispositif de commutation sous enveloppe étanche remplie d'un gaz diélectrique comportant au moins un conducteur selon la présente invention, les deux extrémités de connexion étant montées dans des électrodes du dispositif de commutation.

Les deux orifices du conducteur sont avantageusement contenus dans un plan, ce plan étant vertical.

### BRÈVE DESCRIPTION DES DESSINS

La présente invention sera mieux comprise à l'aide de la description qui va suivre et des dessins en annexes et sur lesquels :
- la figure 1A est une vue en coupe longitudinale d'un exemple de réalisation d'un conducteur électrique selon la présente invention,
- la figure 1B est une vue en coupe transversale selon le plan B-B de la figure 1A,
- la figure 2A est une vue de côté d'un élément isolé du conducteur de la figure 1,
- la figure 2B est une vue en coupe longitudinale de la figure 2A selon le plan de coupe A-A,
- la figure 3A est une vue en coupe longitudinale d'un appareillage électrique sous enveloppe métallique selon la présente invention,
- la figure 3B est une vue en coupe transversale selon le plan C-C de la figure 3A,
- la figure 4A est une vue de côté d'un autre exemple de réalisation d'un conducteur selon la présente invention,
- la figure 4B est une vue en coupe longitudinale selon la plan D-D de la figure 4A,
- la figure 4C est une vue en coupe transversale du conducteur de la figure 4A disposé dans une enceinte métallique, le radiateur ayant été omis,
- la figure 5 est une variante du conducteur de la figure 4A,
- les figures 6A à 6G sont des vues de face de différents exemples de radiateur selon la présente invention ;
- les figures 6H et 6I sont des vues en coupe longitudinale d'autres exemples de radiateur selon la présente invention.

### EXPOSÉ DÉTAILLÉ DE MODES DE RÉALISATION PARTICULIERS

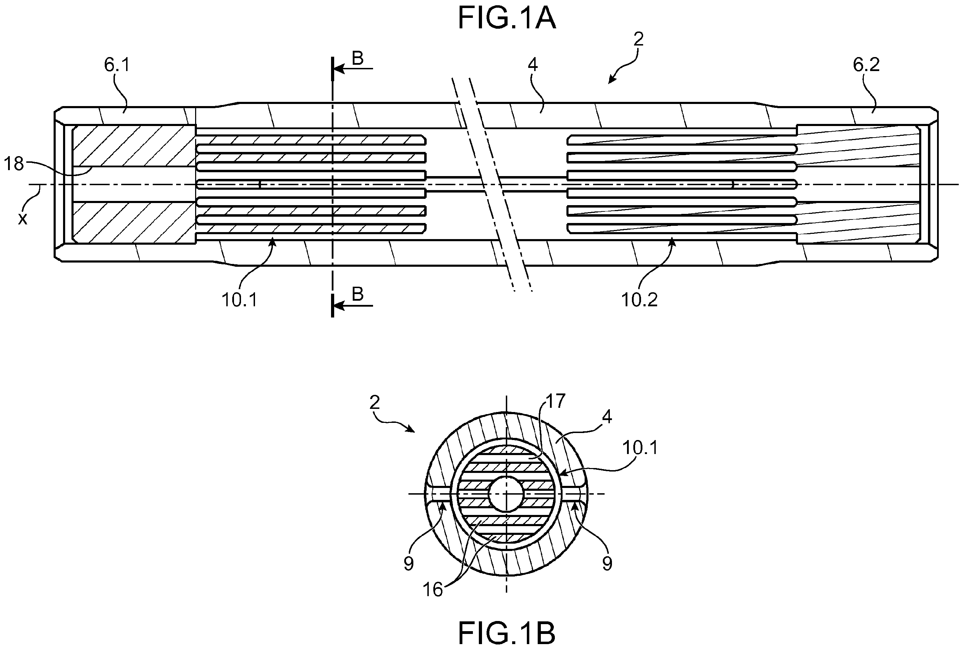

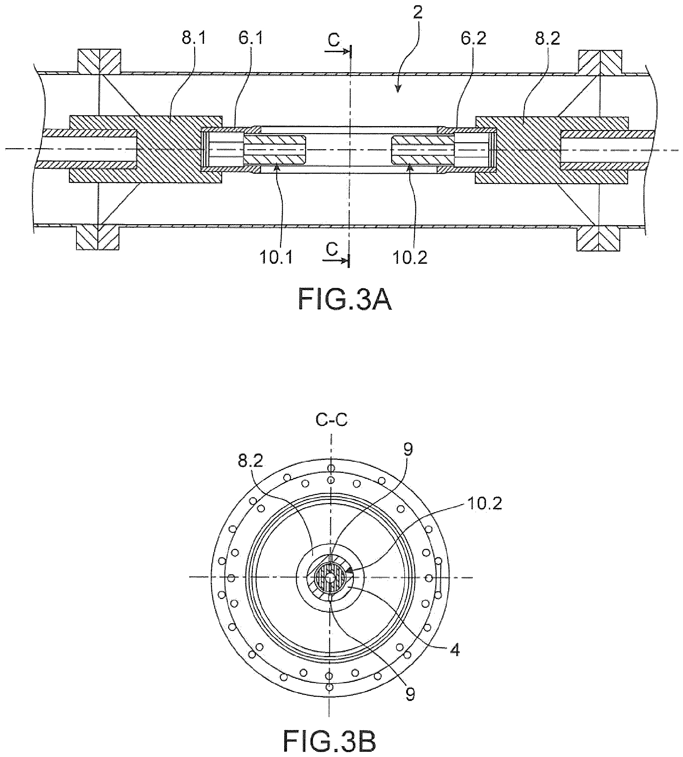

Sur la figure 1A, on peut voir un exemple de réalisation d'un conducteur électrique 2 selon la présente invention comportant une enveloppe cylindrique 4 d'axe longitudinal X à section circulaire munie de deux extrémités longitudinales 6.1, 6.2 destinées à former des contacts pour assurer la connexion avec d'autres composants d'un poste électrique, par l'intermédiaire d'électrodes 8 (visibles sur la figure 3A) .

Le conducteur est destiné à être disposé horizontalement.

L'enveloppe 4 comporte au moins deux orifices 9 permettant de faire circuler le gaz entre l'intérieur et l'extérieur du conducteur par convection naturelle.

Selon la présente invention, le conducteur comporte également des moyens 10.1, 10.2 aptes à extraire spécifiquement la chaleur générée au niveau des extrémités par effet Joule. Ces moyens sont formés par des radiateurs.

Les radiateurs 10.1, 10.2 étant similaires, nous décrirons en détail uniquement le radiateur 10.1.

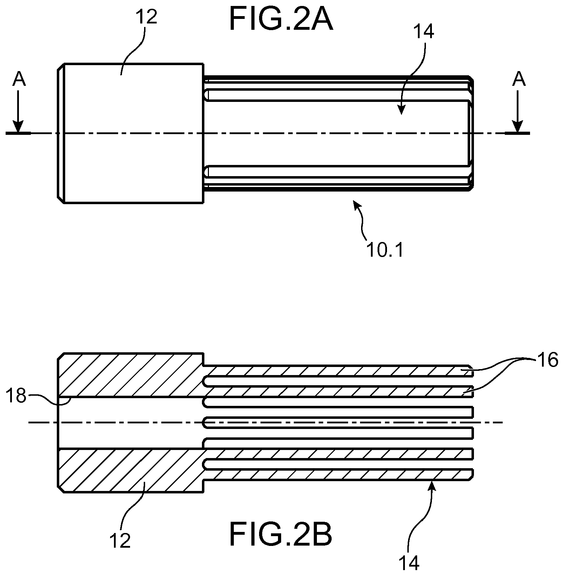

Le radiateur 10.1, plus particulièrement visible sur les figures 2A et 2B, est tel qu'il extrait les calories thermiques au niveau de l'extrémité longitudinale 6.1 et les évacue dans une zone longitudinale 12 du conducteur à l'intérieur du conducteur éloigné des extrémités 6.1, 6.2. Le radiateur 10.1 crée un gradient thermique longitudinal vers l'intérieur du conducteur.

Le radiateur 10.1 comporte un première partie 12 disposée à l'intérieur de l'extrémité 6.1 et en contact avec celle-ci et une deuxième partie formée d'une surface d'échange thermique 14.

La première partie 12 est destinée au montage du radiateur dans l'enveloppe 4.

Dans l'exemple représenté, la surface d'échange thermique 14 est formée d'une pluralité d'ailettes 16 s'étendant selon la direction longitudinale.

De manière avantageuse, les dimensions des ailettes sont choisies de sorte que leurs bords transversaux n'entrent pas en contact avec la face intérieure de l'enveloppe, ce qui permet de ménager un espace annulaire 17 entre les ailettes et l'enveloppe améliorant la circulation du gaz.

Le radiateur 10.1 est orienté angulairement dans l'enveloppe de sorte que la surface d'échange thermique, les ailettes dans le cas présent, n'obturent pas les orifices 9, pour la circulation du gaz, comme cela est visible sur la figure 1B.

Le nombre d'ailettes dépend de la quantité de chaleur à évacuer. Dans certaines applications, une seule ailette peut être suffisante.

La surface d'échange thermique 14 peut également être formée par exemple par un tube d'axe de diamètre extérieur inférieur au diamètre intérieur du conducteur pour assurer la circulation du gaz autour de la surface d'échange thermique, ou par une pluralité de tubes concentriques.

Dans l'exemple représenté, les ailettes sont planes, mais on pourrait envisager des ailettes offrant une autre forme telles que des ailettes ondulées par exemple, permettant d'augmenter la surface d'échange thermique.

De manière particulièrement avantageuse, la première partie 12 du radiateur est emmanchée à force dans l'extrémité longitudinale 6.1. Ce montage est simple et assure un très bon contact ave l'extrémité longitudinale 6.1 ce qui améliore la conduction thermique entre l'extrémité 6.1 et le radiateur et donc le transfert des calories de l'extrémité 6.1 au radiateur 10.1. Il est également envisageable d'utiliser un système de fixation par vis ou bien par mécano soudure.

Par ailleurs, on prévoit avantageusement de réaliser la première partie sous forme massive, i.e. présentant un volume important, améliorant ainsi le refroidissement par effet massique.

Dans l'exemple représenté, le radiateur comporte un passage central 18 traversant, ce passage permet d'accéder à la visserie au niveau de l'électrode à laquelle sera connectée l'extrémité 6.1 et par ailleurs, il permet l'établissement d'un film de gaz entre l'électrode et le conducteur.

Le conducteur est relié électriquement à l'électrode par l'intermédiaire d'un contact électrique (tulipe/rotule, lamelle de contact, contact vissé, ressort de contact ...). Le film de gaz diélectrique forme un isolant électrique entre l'électrode et le conducteur, ce qui empêche la circulation directe du courant électrique entre le conducteur et l'électrode, il est donc forcer de suivre le cheminement normal par le contact électrique.

On pourrait bien entendu réaliser la première partie sous la forme d'une portion de barre cylindrique pleine.

Il est bien entendu que la présente invention n'est pas limitée à des conducteurs à section circulaire.

Sur les figures 3A et 3B, on peut voir le conducteur électrique selon la présente invention mis en place dans une enceinte métallique étanche 19 remplie de gaz diélectrique, par exemple du SF₆.

Le conducteur est connecté à deux électrodes par ses deux extrémités longitudinales 6.1, 6.2

Sur la figure 3B, on peut voir l'orientation d'un des radiateurs par rapport aux orifices 9.

Nous allons maintenant expliquer comment est obtenu le refroidissement des extrémités longitudinales du conducteur.

Lors de la circulation d'un courant électrique dans le conducteur et plus particulièrement entre les extrémités 6.1, 6.2 et les électrodes auxquelles elles sont connectées, il y a apparition d'un échauffement des extrémités 6.1, 6.2 par effet Joule, du fait de la résistance plus importante au niveau de ces connexions.

Notre explication se limitera à l'extrémité 6.1, mais elle s'applique de manière similaire à l'extrémité 6.2.

Les calories thermiques apparaissant dans l'extrémité 6.1 sont transférées à la première partie 12 du radiateur jusqu'aux ailettes 16 où elles sont évacuées grâce à la circulation du gaz dans le conducteur. Le radiateur établit donc un gradient thermique longitudinal de l'extrémité 6.1 vers la zone centrale longitudinale du conducteur, formant une zone froide.

A titre d'exemple, le radiateur présente une longueur égale à 200 mm et le conducteur a une longueur variable pouvant aller de 200 mm à 10 m.

A titre d'exemple, il a été constaté un abaissement de la température de 10°C des extrémités 6.1, 6.2 pour un courant d'intensité de 4000 A.

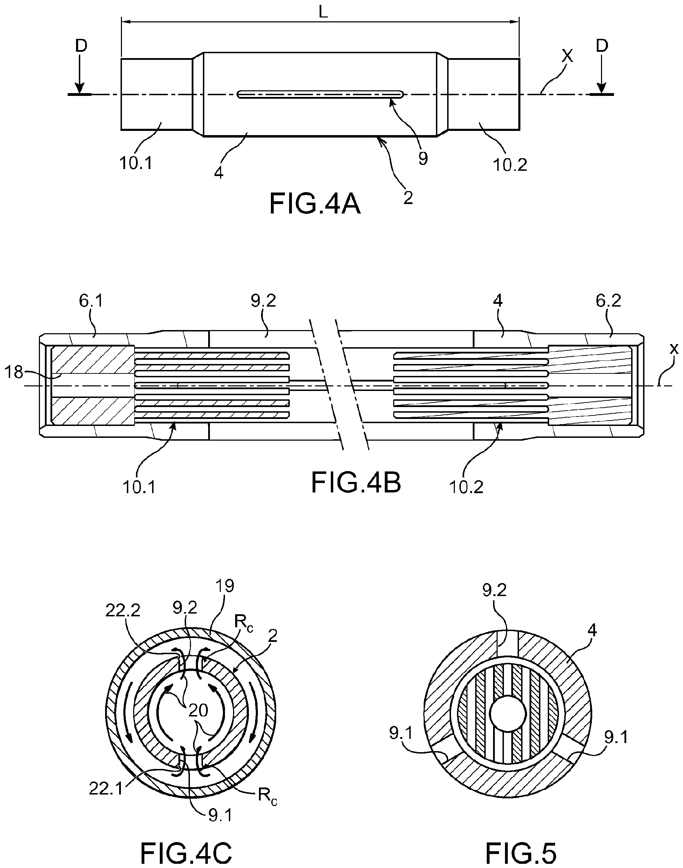

Sur les figures 4A à 4C et 5, on peut voir un exemple particulièrement avantageux de réalisation d'un conducteur selon la présente invention, dans lequel les orifices 9 ont la forme de fente dont l'axe est aligné avec l'axe du conducteur. La forme de fente permet d'obtenir un très bon écoulement du gaz du fait de la grande section pour le passage du gaz, en ayant un effet limité sur l'augmentation de la densité de courant à travers le conducteur.

On entend par « fente » dans la présente invention, un orifice dont la longueur est très grande par rapport à sa largeur. La longueur de la fente est, par exemple comprise entre 2 fois à 200 fois la largeur de la fente.

De préférence, les ailettes ne débouchent pas au niveau des fentes 9.1, 9.2 afin d'éviter d'empêcher la convection du gaz.

Sur la figure 4B, on peut voir une vue en coupe du conducteur de la figure 4C selon un plan de coupe D-D sur laquelle sont visibles les deux orifices 9.1, 9.2 en forme de fente.

Dans l'exemple représenté, le conducteur comporte deux fentes servant au refroidissement des deux radiateurs. Mais il est bien entendu que l'on peut prévoir une paire de fentes pour chacune des extrémités du conducteur, plus précisément au niveau des deux radiateurs.

Sur la figure 4C, sont représentées schématiquement les circulations d'air par des flèches 20, le conducteur 2 étant à l'intérieur d'une enceinte étanche et le radiateur étant omis.

De manière avantageuse, le conducteur est orienté de sorte que l'un des orifices se trouve dans une partie inférieure du conducteur et l'autre orifice se trouve dans une partie supérieure du conducteur de sorte qu'ils forment respectivement un orifice d'admission du gaz frais et un orifice d'échappement du gaz chaud.

De manière particulièrement avantageuse, l'orifice d'échappement se trouve au niveau de la partie la plus haute du conducteur et l'orifice d'admission se trouve au niveau de la partie la plus basse du conducteur. Cette disposition présente l'avantage de provoquer une circulation du gaz le long de toute la surface intérieure de l'enveloppe entre l'orifice d'admission et l'orifice d'échappement, et donc d'améliorer l'extraction des calories thermiques sur toute la surface intérieure de l'enveloppe du conducteur, comme cela est représenté sur la figure 4C.

De manière préférée, l'orifice inférieur présente une section d'admission supérieure à celle de l'orifice supérieur ou section d'échappement, ce qui permet de générer une convection forcée du gaz pénétrant dans le conducteur, s'ajoutant à la convection naturelle. Le gaz circule alors davantage dans le conducteur et améliore l'extraction des calories thermiques.

En considérant une coupe transversale d'un conducteur de la figure 4A, la section des orifices inférieur 9.1 et supérieur 9.2 représente avantageusement 6 % à 10 % de la section totale du conducteur. Cette proportion varie en fonction de l'utilisation, i.e. du diamètre du conducteur, de la valeur du courant nominal traversant le conducteur, de la résistivité du conducteur, etc.

Avantageusement et comme on peut le voir sur la figure 4C, on prévoit que les bords 22.1, 22.2 des orifices supérieur 9.2 et inférieur 9.1 présentent un rayon de courbure Rc suffisamment grand pour limiter les contraintes diélectriques pouvant apparaître au niveau des bords. En effet, plus le rayon de courbure Rc est faible, plus un risque d'apparition d'un effet de pointe devient important du fait de la différence de tension entre le conducteur et l'enveloppe métallique reliée à la masse.

Avantageusement, le rayon de courbure Rc des bords est au moins égal à 3 mm, pour garder des contraintes diélectriques à un niveau acceptable.

Sur la figure 5, on peut voir un exemple de réalisation dans lequel sont réalisés plusieurs orifices d'admission du gaz frais 9.1 et un orifice d'échappement 9.2 du gaz chaud. Dans ce cas, on prévoit de préférence de disposer les orifices d'admission 9.1 de manière symétrique par rapport à un plan vertical passant par l'axe du conducteur.

La présente invention présente l'avantage d'être de réalisation simple et de pouvoir être adapté à tout type de conducteur sans modification de ceux-ci. Elle représente donc une solution économique et efficace pour refroidir les extrémités longitudinales des conducteurs électriques.

Par ailleurs, la réalisation séparée des radiateurs permet de vérifier facilement leur propreté, ainsi que celle de l'intérieur du conducteur électrique, i.e. l'absence de copeaux métalliques.

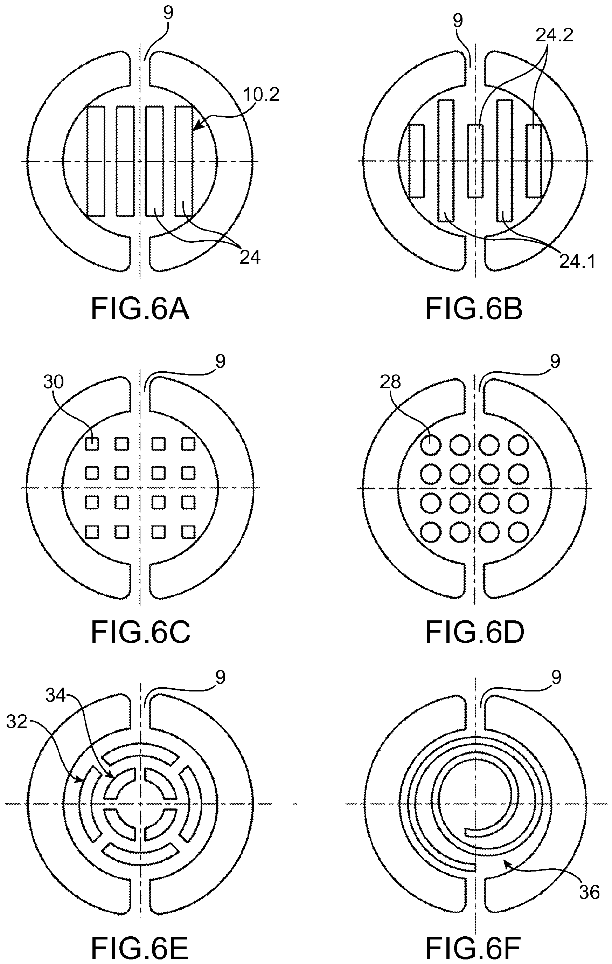

Sur les figures 6A à 6I, on peut voir différents exemples d'ailettes permettant d'assurer une bonne évacuation de la chaleur.

Les figures 6A à 6G sont des vues identiques à la vue 3B.

Sur la figure 6A, les ailettes du radiateur 10.2 sont formées par des plaques parallèles pleines de dimensions identiques 24. Sur la figure 6B, les plaques sont de tailles différentes, dans l'exemple représenté, deux plaques de plus grande taille 26.1 sont interposées entre trois plaques de plus petite taille 26.2.

Sur la figure 6C, la surface d'échange thermique est formée par une pluralité de tiges à section ronde 28, tandis que sur la figure 6D, les tiges sont à section carrée 30.

Sur la figure 6E, la surface d'échange thermique est formée par deux ensembles d'arcs de cercle 32, 34 formant deux cercles concentriques.

Sur la figure 6F, la surface d'échange thermique à la forme d'une spirale 36.

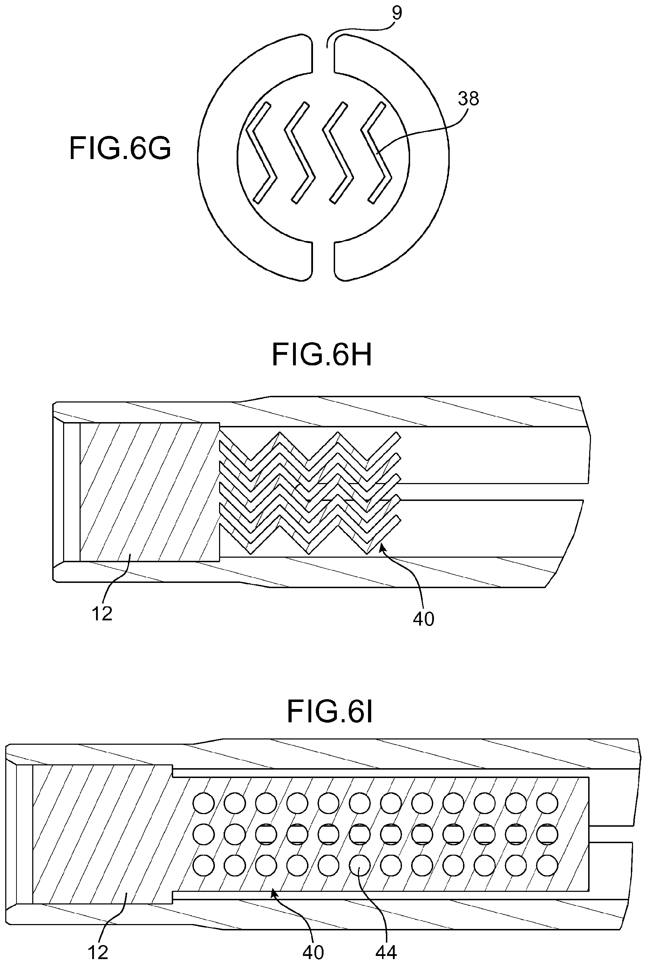

Sur la figure 6G, la surface d'échange thermique est formée par une pluralité de plaques 38 pliées, les axes de pliages étant parallèles l'axe du conducteur.

La figure 6H est une vue similaire à la figure 3A, dans cet exemple, la surface d'échange thermique est formée par une pluralité de plaques 40 pliées, les axes de pliage étant orthogonaux à l'axe du conducteur.

La figure 6I, la surface d'échange thermique est formée par plusieurs plaques parallèles entre elles, chaque plaque 42 étant percée d'une pluralité de trous 44.

## Revendications

1. Dispositif de refroidissement (10.1, 10.2) d'axe longitudinal pour un conducteur d'axe longitudinal (X) pour poste électrique sous enveloppe métallique remplie d'un gaz diélectrique, le conducteur (2) comportant une enveloppe (4) de forme cylindrique creuse, le conducteur (2) comportant un contact à chacune de ses extrémités longitudinales (6.1,6.2), ladite enveloppe (4) définissant un volume intérieur rempli de gaz, ladite enveloppe (4) étant percée d'au moins deux orifices (9.1,9.2) destinés à permettre la circulation du gaz entre le volume intérieur et l'extérieur du conducteur (2), le dispositif de refroidissement (10.1, 10.2) comportant une partie de support (12) destinée à solidariser un conducteur (2) au niveau d'une extrémité de connexion du conducteur (2), et une surface d'échange thermique (14) solidaire de la partie de support (12) et s'étendant longitudinalement **caractérisé en ce que** ledit dispositif de refroidissement (10.1, 10.2) est destiné à être monté dans le conducteur (2) de sorte que son axe longitudinal soit sensiblement coaxial avec l'axe (X) du conducteur (2), et **en ce que** la surface d'échange thermique comporte une première extrémité longitudinale reliée à la partie de support et une deuxième extrémité longitudinale libre, destinée à être reçue dans le volume intérieur du conducteur (2), la surface d'échange thermique étant apte à établir un gradient thermique orienté dans la direction longitudinale vers l'intérieur du conducteur.

2. Dispositif de refroidissement selon la revendication 1, dans lequel la partie de support (12) comporte un passage central traversant (18).

3. Dispositif de refroidissement selon la revendication 1 ou 2, dans lequel la surface d'échange thermique (14) est composée de plusieurs ailettes (16), les ailettes (16) étant parallèles entre elles et parallèles à un plan contenant l'axe longitudinal.

4. Dispositif de refroidissement selon l'une des revendications 1 à 3, la partie de support (12) comporte une forme correspondante à la forme intérieure de l'extrémité de connexion de sorte à permettre un montage à force et à assurer une bonne conduction thermique.

5. Dispositif de refroidissement selon l'une des revendications 1 à 4, réalisé par fonderie en cuivre ou en aluminium.

6. Conducteur électrique (2) d'axe longitudinal (X) pour poste électrique sous enveloppe métallique remplie d'un gaz diélectrique, comportant une enveloppe (4) de forme cylindrique creuse, ledit conducteur (2) étant destiné à être disposé de sorte à ce que son axe longitudinal (X) soit orienté sensiblement horizontalement, le conducteur comportant un contact à chacune de ses extrémités longitudinales (6.1, 6.2), ladite enveloppe (4) définissant un volume intérieur rempli de gaz, ladite enveloppe (4) étant percée d'au moins deux orifices (9.1, 9.2) destinés à permettre la circulation du gaz entre le volume intérieur et l'extérieur du conducteur (2), ledit conducteur comportant des moyens (10.1, 10.2) aptes à établir un gradient thermique orienté sensiblement dans la direction longitudinale vers l'intérieur du conducteur entre chaque extrémité de connexion (6.1, 6.2) et le gaz contenu dans le volume intérieur de sorte à provoquer un refroidissement des extrémités de connexion (6.1, 6.2), dans lequel les moyens (10.1, 10.2) aptes à établir le gradient thermique sont prévus au niveau de chacune des extrémités de connexion (6.1, 6.2) du conducteur (2), chaque moyen (10.1, 10.2) comportant un dispositif de refroidissement selon l'une des revendications 1 à 5, la partie support (12) étant disposée à l'intérieur de l'extrémité de connexion (6.1, 6.2) et en contact avec ladite extrémité et la surface d'échange thermique (14) avec le gaz étant reçu dans le volume intérieur du conducteur.

7. Conducteur électrique selon la revendication 6, dans lequel chaque partie support (12) est emmanchée à force dans le conducteur.

8. Conducteur électrique selon la revendication 6 ou 7, dans lequel la partie support (12) comporte un passage central (18) débouchant d'une part vers l'extérieur du conducteur et d'autre part dans le volume intérieur du conducteur.

9. Conducteur électrique selon l'une des revendications 6 à 8, dans lequel la surface d'échange thermique (14) est orientée par rapport aux orifices de circulation (9.1, 9.2) de gaz de sorte à ne pas les obturer.

10. Conducteur électrique selon l'une des revendications 6 à 9, dans lequel la surface d'échange thermique (14) est formée par une pluralité d'ailettes (16) s'étendant sensiblement longitudinalement à partir de la partie support (12), les ailettes (16) étant toutes parallèles les unes aux autres et parallèles à un plan contenant l'axe longitudinal (X) du conducteur.

11. Conducteur électrique selon l'une des revendications 6 à 10, comportant au moins deux orifices (9.1, 9.2) pour la circulation du gaz au niveau de chacun des surfaces d'échange thermique (14).

12. Conducteur électrique selon l'une des revendications 6 à 11, dans lequel les orifices (9.1, 9.2) de circulation de gaz sont contenus dans un plan contenant l'axe longitudinal, avantageusement ledit plan étant sensiblement vertical.

13. Conducteur électrique selon l'une des revendications 6 à 12, dans lequel l'enveloppe (4) comporte une partie supérieure et une partie inférieure délimitées par un plan sensiblement horizontal contenant l'axe longitudinal (X) et, un desdits orifices (9.2) étant dans sa partie supérieure, dit orifice supérieur, et l'autre orifice (9.1) étant dans sa partie inférieure, dit orifice inférieur, lesdits orifices ayant chacun une forme de fente, dont la plus grande dimension s'étend sensiblement le long de l'axe longitudinal (X).

14. Conducteur électrique selon la revendication 13, dans lequel la section de l'orifice inférieur (9.1) est supérieure ou égale à la section de l'orifice supérieur (9.2), le rapport de la section de l'orifice inférieur (9.1) et de la section de l'orifice supérieur (9.2) étant avantageusement compris entre 1 et 1,5.

15. Conducteur électrique selon la revendication 13 ou 14, comportant deux orifices (9.1) dans la partie inférieure symétriques par rapport à un plan contenant l'axe longitudinal et l'orifice (9.2) de la partie supérieure.

16. Conducteur électrique selon l'une des revendications 13 à 15, dans lequel, en considérant une section du conducteur par un plan orthogonal à l'axe longitudinal (X) au niveau des orifices (9.1, 9.2), la section des orifices (9.1, 9.2) représente de 6 % à 10 % de la section totale du conducteur et le rapport entre la longueur de chaque orifice (9.1, 9.2) et sa largeur est compris entre 2 et 200.

17. Dispositif de commutation sous enveloppe étanche (19) remplie d'un gaz diélectrique comportant au moins un conducteur (2) selon l'une des revendications 6 à 16.

18. Dispositif de commutation selon la revendication 17, dans lequel les deux extrémités de connexion (6.1, 6.2) sont montées dans des électrodes (8.1, 8.2) du dispositif de commutation.

## Patentansprüche

1. Kühlvorrichtung (10.1, 10.2) mit Längsachse für einen Leiter mit Längsachse (X) für Schaltanlagen mit Metallhülle, die mit dielektrischem Gas gefüllt ist, wobei der Leiter (2) eine hohlzylindrische Hülle (4) enthält, wobei der Leiter (2) ein Kontaktstück an jedem seiner Längsenden (6.1, 6.2) aufweist, wobei die Hülle (4) einen mit Gas gefüllten Innenraum definiert, wobei die Hülle (4) mit zumindest zwei Bohrungen (9.1, 9.2) versehen ist, die dazu bestimmt sind, die Zirkulation von Gas zwischen dem Innenraum und dem Außenbereich des Leiters (2) zu gestatten, wobei die Kühlvorrichtung (10.1, 10.2) ein Tragteil (12) enthält, das dazu bestimmt ist, einen Leiter (2) im Bereich eines Anschlussendes des Leiters (2) und eine Wärmeaustauschfläche (14) fest zu verbinden, die fest mit dem Tragteil (12) verbunden ist und sich longitudinal erstreckt, **dadurch gekennzeichnet, dass** die Kühlvorrichtung (10.1, 10.2) dazu bestimmt ist, in den Leiter (2) so angebracht zu werden, dass ihre Längsachse im Wesentlichen koaxial zur Achse (X) des Leiters (2) verläuft, und dass die Wärmeaustauschfläche ein erstes Längsende aufweist, das mit dem Tragteil verbunden ist, sowie ein freies, zweites Längsende, das dazu bestimmt ist, in dem Innenraum des Leiters (2) aufgenommen zu werden, wobei die Wärmeaustauschfläche dazu geeignet ist, einen Wärmegradienten auszubilden, der in Längsrichtung zum Innenbereich des Leiters hin ausgerichtet ist.

2. Kühlvorrichtung nach Anspruch 1, wobei das Tragteil (12) einen hindurchführenden Mitteldurchgang (18) aufweist.

3. Kühlvorrichtung nach Anspruch 1 oder 2, wobei die Wärmeaustauschfläche (14) aus mehreren Rippen (16) zusammengesetzt ist, wobei die Rippen (16) parallel zueinander und parallel zu einer Ebene verlaufen, welche die Längsachse enthält.

4. Kühlvorrichtung nach einem der Ansprüche 1 bis 3, wobei das Tragteil (12) eine der Innenform des Anschlussendes entsprechende Form aufweist, so dass ein Presssitz gestattet und eine gute Wärmeleitung sichergestellt werden.

5. Kühlvorrichtung nach einem der Ansprüche 1 bis 4, die durch Kupfer- oder Aluminiumguss hergestellt ist.

6. Elektrischer Leiter (2) mit Längsachse (X) für Schaltanlagen mit Metallhülle, die mit dielektrischem Gas gefüllt ist, enthaltend eine hohlzylindrische Hülle (4), wobei der Leiter (2) dazu bestimmt ist, so angeordnet zu werden, dass seine Längsachse (X) im Wesentlichen horizontal ausgerichtet ist, wobei der Leiter ein Kontaktstück an jedem seiner Längsenden (6.1, 6.2) aufweist, wobei die Hülle (4) einen mit Gas gefüllten Innenraum definiert, wobei die Hülle (4) mit zumindest zwei Bohrungen (9.1, 9.2) versehen ist, die dazu bestimmt sind, die Zirkulation von Gas zwischen dem Innenraum und dem Außenbereich des Leiters (2) zu gestatten, wobei der Leiter Mittel (10.1, 10.2) aufweist, die dazu geeignet sind, einen Wärmegradienten, der im Wesentlichen in Längsrichtung zum Innenbereich des Leiters hin ausgerichtet ist, zwischen jedem Anschlussende (6.1, 6.2) und dem in dem Innenraum enthaltenen Gas auszubilden, so dass ein Abkühlen der Anschlussenden (6.1, 6.2) hervorgerufen wird, bei dem die Mittel (10.1, 10.2) zum Ausbilden des Wärmegradienten im Bereich eines jeden Anschlussendes (6.1, 6.2) des Leiters (2) vorgesehen sind, wobei jedes Mittel (10.2, 10.2) eine Kühlvorrichtung nach einem der Ansprüche 1 bis 5 aufweist, wobei das Tragteil (12) innerhalb des Anschlussendes (6.1, 6.2) angeordnet ist und mit dem Ende in Kontakt steht, und die Wärmeaustauschfläche (14) zum Wärmeaustausch mit dem Gas in dem Innenraum des Leiters aufgenommen ist.

7. Elektrischer Leiter nach Anspruch 6, wobei jedes Tragteil (12) in den Leiter eingepresst ist.

8. Elektrischer Leiter nach Anspruch 6 oder 7, wobei das Tragteil (12) einen Mitteldurchgang (18) aufweist, der einerseits zum Außenbereich des Leiters und andererseits in den Innenraum des Leiters mündet.

9. Elektrischer Leiter nach einem der Ansprüche 6 bis 8, wobei die Wärmeaustauschfläche (14) bezüglich der Gaszirkulationsbohrungen (9.1, 9.2) so ausgerichtet ist, dass sie diese nicht verschließt.

10. Elektrischer Leiter nach einem der Ansprüche 6 bis 9, wobei die Wärmeaustauschfläche (14) aus einer Mehrzahl von Rippen (16) gebildet ist, die sich im Wesentlichen longitudinal ausgehend von dem Tragteil (12) erstrecken, wobei die Rippen (16) alle parallel zueinander und parallel zu einer Ebene verlaufen, die die Längsachse (X) des Leiters enthält.

11. Elektrischer Leiter nach einem der Ansprüche 6 bis 10, enthaltend zumindest zwei Bohrungen (9.1, 9.2) für die Zirkulation von Gas im Bereich einer jeden der Wärmeaustauschflächen (14).

12. Elektrischer Leiter nach einem der Ansprüche 6 bis 11, wobei die Gaszirkulationsbohrungen (9.1, 9.2) in einer Ebene enthalten sind, welche die Längsachse enthält, wobei die Ebene vorteilhaft im Wesentlich vertikal verläuft.

13. Elektrischer Leiter nach einem der Ansprüche 6 bis 12, wobei die Hülle (4) einen oberen Bereich und einen unteren Bereich aufweist, die von einer im Wesentlichen horizontal verlaufenden Ebene eingegrenzt werden, welche die Längsachse (X) enthält, wobei eine der Bohrungen (9.2), obere Bohrung genannt, in ihrem oberen Bereich liegt und die andere Bohrung (9.1), untere Bohrung genannt, in ihrem unteren Bereich liegt, wobei die Bohrungen jeweils eine Schlitzform haben, von welcher die größere Abmessung im Wesentlichen entlang der Längsachse (X) verläuft.

14. Elektrischer Leiter nach Anspruch 13, wobei der Querschnitt der unteren Bohrung (9.1) größer oder gleich dem Querschnitt der oberen Bohrung (9.2) ist, wobei das Verhältnis des Querschnitts der unteren Bohrung (9.1) zum Querschnitt der oberen Bohrung (9.2) vorteilhaft zwischen 1 und 1,5 liegt.

15. Elektrischer Leiter nach Anspruch 13 oder 14, enthaltend zwei Bohrungen (9.1) in dem unteren Bereich, die bezüglich einer Ebene symmetrisch verlaufen, welche die Längsachse und die Bohrung (9.2) des oberen Bereichs enthält.

16. Elektrischer Leiter nach einem der Ansprüche 13 bis 15, wobei bei Anbetracht eines Querschnitts des Leiters durch eine Ebene orthogonal zur Längsachse (X) im Bereich der Bohrungen (9.1, 9.2) der Querschnitt der Bohrungen (9.1, 9.2) 6 % bis 10 % des Gesamtquerschnitts des Leiters darstellt und das Verhältnis zwischen der Länge einer jeden Bohrung (9.1, 9.2) und ihrer Breite zwischen 2 und 200 liegt.

17. Schaltvorrichtung mit abgedichteter Hülle (19), die mit einem dielektrischen Gas gefüllt ist, enthaltend zumindest einen Leiter (2) nach einem der Ansprüche 6 bis 16.

18. Schaltvorrichtung nach Anspruch 17, wobei die beiden Anschlussenden (6.1, 6.2) in Elektroden (8.1, 8.2) der Schaltvorrichtung angebracht sind.

## Claims

1. A cooling device (10.1, 10.2) with a longitudinal axis, for a conductor having a longitudinal axis (X) for a gas insulated substation, having a gas vessel filled with a dielectric gas, the conductor comprising a casing (4) in the form of a hollow cylinder, with the conductor including a contact at each of its longitudinal ends (6.1, 6.2), said casing (4) defining an internal space filled with gas, said casing (4) further having at least two ports (9.1, 9.2) adapted to allow the gas to flow between the internal space and the outside of the conductor (2), the cooling device (10.1, 10.2) comprising a support portion (12) configured to be attached to a conductor (2) at a connection end of the conductor (2), and a heat exchange surface portion (14) attached to the support portion (12) et extending longitudinally, **characterized in that in that** said cooling device (10.1, 10.2) is adapted to be fitted in the conductor (2) in such a way that its longitudinal axis is substantially coaxial with the axis (X) of the conductor (2), **in that** the heat exchange surface comprises a first longitudinal end connected to the support portion and a free second longitudinal end, being adapted to be received in the internal space of the conductor (2), the heat exchange surface being configured to establish a thermal gradient orientated in a longitudinal direction towards the inside of the conductor

2. A cooling device according to claim 1, wherein the support portion (12) has a central through passage (18).

3. A cooling device according to claim 1 or claim 2, wherein the heat exchange surface portion (14) consists of a plurality of fins (16), the fins (16) being parallel to each other and parallel to a plane that contains the longitudinal axis.

4. A cooling device according to any one of claims 1 to 3, wherein the support portion (12) includes a profile that corresponds to the internal profile of the end, in such a way as to permit force fitting and to ensure good heat conduction.

5. A cooling device according to any one of claims 1 to 4, made by casting in copper or aluminum.

6. An electrical conductor (2) with a longitudinal axis (X) for a gas insulated substation having a gas vessel filled with a dielectric gas, the conductor comprising a casing (4) in the form of a hollow cylinder, said conductor (2) being adapted to be so disposed that its longitudinal axis (X) is oriented substantially horizontally, with the conductor including a contact at each of its longitudinal ends (6.1, 6.2), said casing (4) defining an internal space filled with gas, said casing (4) further having at least two ports (9.1, 9.2) adapted to allow the gas to flow between the internal space and the outside of the conductor (2), said conductor further including means (10.1, 10.2) for establishing a thermal gradient oriented substantially in the longitudinal direction towards the inside of the conductor, between each connection end (6.1, 6.2) and the gas contained in the internal space, so as to cause the connection ends (6.1, 6.2) to be cooled, wherein the means (10.1, 10.2) for establishing said thermal gradient are arranged in the region of each of the connection ends (6.1, 6.2) of the conductor (2), each said means (10.1, 10.2) comprising a cooling device according to one of the claims 1 to 5, the support portion (12) being disposed inside the connection end (6.1, 6.2) and in contact with said end and the surface portion (14) for heat exchange with the gas being located in the inner volume of the conductor.

7. A conductor according to claim 6, wherein each support portion (12) is force fitted into the conductor.

8. A conductor according to claim 6 or claim 7, wherein the support portion (12) has a central passage (18) that is open at one end to the outside of the conductor, and at the other end to the inside of the conductor.

9. A conductor according to any one of claims 6 to 8, wherein the heat exchange surface portion (14) is oriented relative to the gas flow ports (9.1, 9.2) in such a way as not to shut them.

10. A conductor according to any one of claims 6 to 9, wherein the heat exchange surface portion (14) consists of a plurality of fins (16) extending substantially horizontally from the support portion (12), the fins (16) being all parallel to one another and parallel to a plane that contains the longitudinal axis (X) of the conductor.

11. A conductor according to any one of claims 6 to 10, having at least two said gas flow ports (9.1, 9.2) at each of the heat exchange surface portions (14).

12. A conductor according to any one of claims 6 to 11, wherein the gas flow ports (9.1, 9.2) are contained in a plane that also contains the longitudinal axis, said plane being, advantageously, substantially vertical.

13. A conductor according to any one of claims 6 to 12, wherein the casing (4) consists of an upper portion and a lower portion, which portions are delimited by a substantially horizontal plane that contains the longitudinal axis (X), one of said ports (9.2) being in the upper portion of the casing and being referred to as the upper port, while the other port (9.1) is in the lower portion of the casing and is referred to as the lower port, and each of said ports being in the form of a slot the major dimension of which extends substantially along the longitudinal axis (X).

14. A conductor according to claim 13, wherein the cross sectional area of the lower port (9.1) is larger than or equal to the cross sectional area of the upper port (9.2), the ratio of the cross sectional area of the lower port (9.1) to the cross sectional area of the upper port (9.2) advantageously lying in the range 1 to 1.5.

15. A conductor according to claim 13 or 14, having two ports (9.1) in the lower portion of the casing, these ports being symmetrical relative to a plane that contains both the longitudinal axis and the port (9.2) that is formed in the upper portion.

16. A conductor according to any one of claims 13 to 15, wherein, having regard to a cross section of the conductor taken on a plane orthogonal to the longitudinal axis (X) level with the ports (9.1, 9.2), the cross sectional area of the ports (9.1, 9.2) represents from 6% to 10% of the total cross sectional area of the conductor and wherein the ratio of the length of each port (9.1, 9.2) to its width lies in the range 2 to 200.

17. A gas insulated switching device, the sealed gas vessel (19) of which is filled with a dielectric gas, the device including at least one conductor (2) according to any one of claims 6 to 16.

18. A switching device according to claim 17, wherein the two ends (6.1, 6.2) are fixed in electrodes (8.1, 8.2) of the switching device.
